# EUROPEAN PATENT SPECIFICATION

(11) **EP 4 462 558 B1**
(45) Date of publication and mention of the grant of the patent: **01.04.2026**
(21) Application number: 23760386.5
(22) Date of filing: 22.02.2023
(51) Int. Cl.: H01M 50/204, H01M 50/211, H01M 50/30, H01M 50/35, H01M 10/0525, H01M 10/6556

(54) **BATTERY PACK**
BATTERIEPACK
BLOC-BATTERIE

(30) Priority: 22.02.2022 KR 20220023257; 21.02.2023 KR 20230023122
(43) Date of publication of application: 13.11.2024
(73) Proprietor: LG Energy Solution, Ltd., Seoul 07335 (KR)
(72) Inventor: LEE, Jae Hyun, Daejeon 34122 (KR); SHIN, Ju Hwan, Daejeon 34122 (KR); LEE, Tae Kyeong, Daejeon 34122 (KR); LEE, Hyoung Suk, Daejeon 34122 (KR)
(74) Representative: Plasseraud IP
(86) International application number: PCT/KR2023/002556
(87) International publication number: WO 2023/163512

(56) References cited:
- WO-A1-2012/133710
- WO-A1-2017/177831
- WO-A1-2022/035296
- KR-A- 20190 004 351
- KR-A- 20190 069 873
- KR-A- 20210 129 512
- KR-A- 20210 150 843
- US-B2- 11 063 316
- US-B2- 9 166 260

## Description

### TECHNICAL FIELD

The present invention relates to a battery pack, and more particularly to a battery pack including a plurality of battery cells.

### BACKGROUND ART

A secondary battery having high ease of application in accordance with the product group and high electrical characteristics such as energy density is being widely applied not only to portable devices but also electric vehicles (EVs), hybrid electric vehicles (HEVs), or the like, which are driven by an electric driving source. Such a secondary battery is not only a primary advantage that the use of fossil fuels is significantly reduced, but also an additional advantage that by-products due to the use of energy are not generated at all, and thus, is attracting attention as a new energy source for enhancing environment-friendliness and energy efficiency.

Secondary batteries that are widely used at present comprise lithium ion batteries, lithium polymer batteries, nickel-cadmium batteries, nickel-metal hydride batteries, and nickel-zinc batteries. In addition, the plurality of battery cells may be connected in series and/or parallel to constitute a battery pack satisfying required output voltage and charge/discharge capacity conditions. The number of battery cells provided in the battery pack may be variously set according to the required output voltage or charge/discharge capacity.

The plurality of battery cells may be connected in series/parallel to constitute the battery pack. In this case, the battery pack may include a housing and a plurality of battery modules accommodated in the housing, and each battery module may include at least one battery cell.

In the housing of the battery pack according to the related art, a reinforcing part (for example, cross beam) to pass between some and others of the plurality of battery modules to maintain rigidity of the battery pack may be generally provided, and a coupling part (for example, coupling boss, etc.) for mechanical coupling with the housing may be generally provided in the battery module.

However, in the battery pack according to the related art, since the reinforcing part and the coupling part occupy a portion of a space in the housing, there is a problem in that space utilization and energy density of the battery pack are deteriorated.

The patent US 9166260 describes a battery pack with a first battery cell, a second battery cell, and vent holes.

### DISCLOSURE OF THE INVENTION

### TECHNICAL PROBLEM

One object to be realized by the present invention is to provide a battery pack having improved energy density while maintaining rigidity.

Another object to be realized by the present invention is to provide a battery pack in which a gas generated in each battery unit is smoothly discharged to the outside.

### TECHNICAL SOLUTION

A battery pack according to the present invention is claimed in claim 1.

The cases of the plurality of battery units may be stacked to be in contact with or adjacent to each other.

A length of the case may be greater than half of a distance between both side parts of the housing.

A reinforcing part disposed to pass between some and the others of the plurality of battery units may not be provided in the housing.

A coupling part configured to mechanically couple the case to the inside of the housing may not be provided in the housing.

The first passage may extend in parallel to the battery unit.

The vent passage may further include a second passage extending along a side part of the housing and configured to communicate with the first passage.

The bottom part of the housing may include an expansion portion further expanding outward than the side part of the housing, and the second passage may be provided in the expansion portion.

The second passage may be provided in the side part of the housing.

The vent passage may further include an outlet disposed at an end of the second passage to discharge a gas to the outside of a circumference of the housing.

The inner bottom surface of the housing may include: a first area provided with an attachment member to which the plurality of battery units are attached; and a second area in which the inlet is provided.

A coolant passage disposed between the inner bottom surface and the outer bottom surface of the housing and partitioned from the first passage may be provided in the housing.

The coolant passage may be disposed above the first passage.

### ADVANTAGEOUS EFFECTS

According to the preferred embodiment of the present invention, since the battery cells of each battery unit are disposed in a series form, the case may be formed to be elongated and narrowed, and the case may be the rigid body. As a result, the rigidity of the battery pack may be maintained without the separate reinforcing part due to the self-rigidity and structural rigidity of the case of the plurality of battery units, and the energy density of the battery pack may be improved compared to the case in which the separate reinforcing part is provided in the housing.

In addition, the gas leaking from the first battery cell may be directly discharged to the vent passage through the first vent hole, and the gas leaking from the second battery cell may be directly discharged into the vent passage through the second vent hole. Thus, the gas generated in the battery unit may be smoothly discharged to the outside.

In addition, the plurality of battery units may be mounted in the housing by the attachment member provided on the bottom surface of the housing. As a result, the plurality of battery units may be stably fixed in the housing without the separate coupling part for mechanically coupling each battery unit to the housing, and when compared to the case in which each battery unit is provided with the separate coupling part, the energy density may be improved.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of a battery pack according to an embodiment of the present invention.
FIG. 2 is a plan view of the battery pack according to an embodiment of the present invention.
FIG. 3 is a perspective view illustrating a state in which a plurality of battery units are removed from the battery pack illustrated in FIG. 1.
FIG. 4 is a perspective view of the battery unit according to an embodiment of the present invention.
FIG. 5 is an exploded perspective view of the battery unit according to an embodiment of the present invention.
FIG. 6 is a plan view illustrating a vent passage of the battery pack according to an embodiment of the present invention.
FIG. 7 is a cutaway view illustrating an inlet, a first passage, and a second passage of FIG. 6.
FIG. 8 is a plan view illustrating a vent passage of a battery pack according to another embodiment of the present invention.
FIG. 9 is a cutaway view illustrating an inlet, a first passage, and a second passage of FIG. 8.
FIG. 10 is a perspective view of a battery pack according to a comparative example.
FIG. 11 is a plan view of the battery pack according to the comparative example.
FIG. 12 is an enlarged view illustrating a coupling part and a periphery of the coupling part, which are illustrated in FIG. 10.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

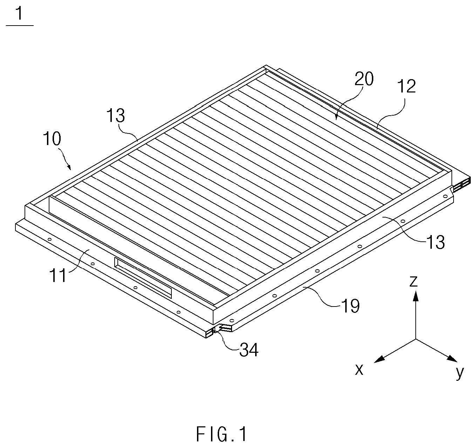

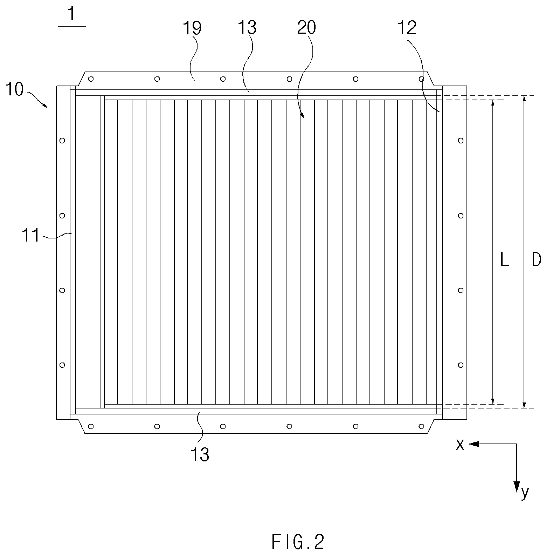

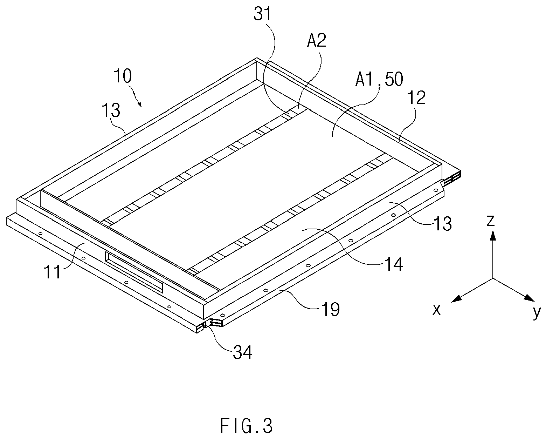

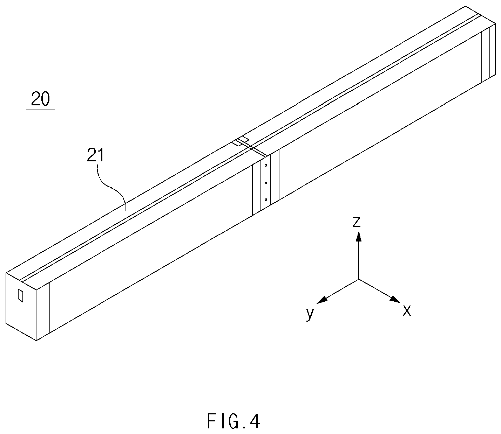

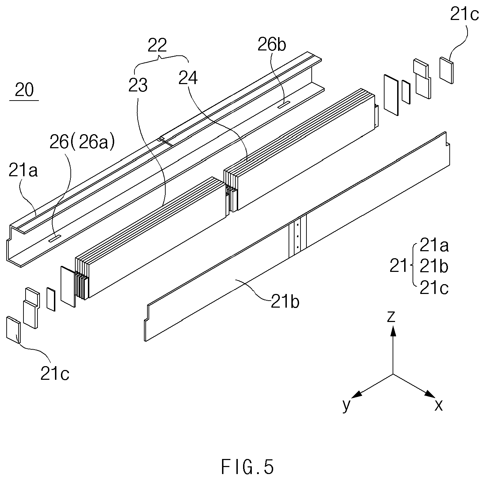

FIG. 1 is a perspective view of a battery pack according to an embodiment of the present invention, FIG. 2 is a plan view of the battery pack according to an embodiment of the present invention, FIG. 3 is a perspective view illustrating a state in which a plurality of battery units are removed from the battery pack illustrated in FIG. 1, FIG. 4 is a perspective view of the battery unit according to an embodiment of the present invention, and FIG. 5 is an exploded perspective view of the battery unit according to an embodiment of the present invention.

Referring to FIGS. 1 to 3, a battery pack 1 according to an embodiment of the present invention may include a housing 10 and a plurality of battery units 20 disposed within the housing 10.

The housing 10 may have a substantially box shape with a top surface opened and may have an inner space capable of accommodating the plurality of battery units 20. When the plurality of battery units 20 are accommodated in the housing 10, the opened top surface of the housing 10 may be covered by a cover (not shown).

In more detail, the housing 10 may include a front part 11, a rear part 12, a pair of side parts 13, and a bottom part 14.

The bottom part 14 may have a plate shape formed substantially horizontally. The front part 11, the rear part 12, and the pair of side parts 13 may protrude upward from the bottom part 14. The front part 11, the rear part 12, and the pair of side parts 13 may be disposed at an edge of the bottom part 14 or disposed inside the edge.

The bottom part 14 may include an expansion portion 19 that extends outward from each of both the side parts 13. The expansion portion 19 may be a component for mounting the battery pack 1 on an electronic device (e.g., an electric vehicle) powered by the battery pack 1.

The pair of side parts 13 may connect the front part 11 to the rear part 12. The front part 11 and the rear part 12 may extend parallel to each other with respect to a first direction (e.g., a direction parallel to a y-axis in FIG. 1), and the pair of side parts 13 may extend parallel to each other with respect to a second direction (e.g., a direction parallel to an x-axis in FIG. 1) perpendicular to the first direction. In the present specification, the meaning of parallel or perpendicular to each other is not limited to an academic meaning and may include an error range in manufacturing.

The first direction may be a width direction of the housing 10, and the second direction may be a length direction of the housing 10.

The plurality of battery units 20 may be accommodated in the housing 10. Each of the battery units 20 may be disposed parallel to the width direction of the housing 10.

A length L of each battery unit 20 may be greater than half of a distance D between both the side parts 13 of the housing 10. Preferably, the length L of each battery unit 20 may be 90% or more of the distance D between both the side parts 13 of the housing 10. Both ends of each battery unit 20 may be in contact with or adjacent to both the side parts 13 of the housing 10.

The plurality of battery units 20 may be disposed side by side with each other. The plurality of battery units 20 may be stacked so as to be in contact with or adjacent to each other. The plurality of battery units 20 may be stacked in a longitudinal direction of the housing 10. The plurality of battery units 20 may be arranged to form a single row.

In more detail, referring to FIGS. 4 and 5, each battery unit 20 may include a case 21 extending parallel to the width direction of the housing 10 and a plurality of battery cells accommodated in the case 21.

The case 21 may define an outer appearance of the battery unit 20. The case 21 may have a bar or beam shape extending parallel to the width direction of the housing 10.

The case 21 may be a rigid body. Preferably, the case 21 may include a metal material. Thus, the rigidity of the battery pack 10 may be maintained highly by the rigidity of the cases 21 of the plurality of battery units 20.

The length L of the case 21 may be greater than half of the distance D between both the side parts 13 of the housing 10. Preferably, the length L of the case 21 may be 90% or more of the distance D between both the side parts 13 of the housing 10. Both ends of the case 21 may be in contact with or adjacent to both the side parts 13 of the housing 10.

The cases 21 of the plurality of battery units 20 may be arranged side by side with each other. The cases 21 of the plurality of battery units 20 may be stacked to be in contact with or adjacent to each other. The cases 21 of the plurality of battery units 20 may be stacked in the longitudinal direction of the housing 10. The cases 21 of the plurality of battery units 20 may be arranged to form a single row.

The case 21 may be configured by coupling a plurality of components. For example, as illustrated in FIG. 5, the case 21 may include a body 21a with both opened ends and one surface opened, a first cover 21b covering the opened one surface of the body 21a, and a pair of second covers 21c covering both the opened ends of the main body 21a. However, the configuration of the case 21 is not limited thereto.

Each battery cell 22 may be a pouch-type battery cell in which an electrode assembly and an electrolyte are accommodated in a pouch-type battery case. In addition, the battery unit 20 including the plurality of battery cells 22 may be called a scalable pouch unit (SPU).

Since the pouch-type battery case of the battery cell 22 may be made of a soft material rather than the rigid body, the pouch-type battery case may not have sufficient rigidity. Therefore, it is important that the case 21 of the battery unit 20 is made of a rigid body in order to maintain the high rigidity of the battery pack 10.

The plurality of battery cells 22 may extend parallel to the longitudinal direction of the case 21 (e.g., the direction parallel to the y-axis of FIG. 5) and may be arranged in a series form.

In more detail, the plurality of battery cells 22 may include a first battery cell 23 disposed at one side in the longitudinal direction of the case 21 and a second battery cell 24 disposed at the other side in the longitudinal direction of the case 21.

The first battery cell 23 and the second battery cell 24 may extend parallel to the width direction of the housing 10, that is, the longitudinal direction of the case 21. The second battery cell 24 may be disposed at one side of the first battery cell 23 in the width direction of the housing 10, that is, in the longitudinal direction of the case 21 and may be aligned in parallel with the first battery cell 23.

Thus, the case 21 may integrally accommodate the first battery cell 23 and the second battery cell 24.

Each of the first battery cell 23 and the second battery cell 24 may include at least one, preferably a plurality of cells.

The number of cells included respectively in the first battery cells 23 and the second battery cells 24 may be the same. When the first battery cell 23 includes the plurality of cells, the plurality of cells included in the first battery cell 23 may be stacked in the width direction (e.g., the direction parallel to the x-axis in FIG. 5) of the case. Similarly, when the second battery cell 24 includes the plurality of cells, the plurality of cells included in the second battery cell 24 may be stacked in the width direction of the case 21.

The plurality of battery cells 22 may be disposed in a series form so that the length of the case 21 of the battery unit 20 increases. Thus, as described above, both the ends of the case 21 may be close to both side parts 13 of the housing 10 and may have structural rigidity that resists to bending in the width direction of the battery pack 1 due to the rigidity of the case 21.

In addition, the plurality of battery cells 22 may be disposed in a series form, and thus, when compared to a case in which the plurality of battery cells 22 are stacked in parallel, the width of the case 21 of the battery unit 20 may be reduced. Thus, the number of battery units 20 stacked in the housing 10 may increase, and the density of the case 21 in the longitudinal direction of the housing 10 may increase. Thus, the structural rigidity that resists to the bending of the battery pack 1 in the longitudinal direction may increase by the rigidity of the cases 21 of the plurality of battery units 20.

Referring to FIGS. 1 to 3, the battery pack 1 may further include an attachment member 50 which is provided on the bottom part 14 of the housing 10 and to which the plurality of battery units 20 are attached. The plurality of battery units 20 may be mounted on the housing 10 in a state in which the attachment member 50 is provided on the bottom part 14 of the housing 10.

For example, the attachment member 50 may be a resin applied to the bottom part 14 of the housing 10. However, the configuration of the attachment member 50 is not limited thereto.

The plurality of battery units 20 may be firmly mounted in the housing 10 without a separate mechanical coupling part by the attachment member 50.

The attachment member 50 may be provided by avoiding an inlet 31 of a vent passage 30 to be described later. Therefore, the attachment member 50 may not cover the inlet 31 of the vent passage 30.

In more detail, the bottom part 14 of the housing 10, more specifically, an inner bottom surface of the housing 10 may include a first area A1 provided with the attachment member 50 and a second area A2 provided with the inlet 31. In FIG. 3, reference symbol 'A1' and reference numeral '50' may be pointed to the same point, but those skilled in the art may easily understood the first area A1 included in the bottom part 14 of the housing 10 and the attachment member 50 disposed on the first area A1.

Each second area A2 may be formed to be elongated in the longitudinal direction of the housing 10. A plurality of inlets 31 spaced at regular intervals from each other in the longitudinal direction of the housing 10 may be provided in each second area A2.

A plurality of second areas A2 spaced apart from each other in the width direction of the housing 10 may be provided. For example, a pair of second areas A2 may be provided.

The plurality of inlets 31 provided in one second area A2 and the plurality of inlets 31 provided in the other second area A2 may be disposed to correspond to each other in the width direction of the housing 10.

The first area A1 may be divided into a plurality of areas by the plurality of second areas A2. For example, the first area A1 may include a central area disposed between the pair of second areas A2 and a pair of side areas disposed outside the pair of second areas A2.

However, shapes of the first area A1 and the second area A2 are not limited thereto, and it is also possible that the attachment member 50 is provided between at least some of the plurality of inlets 31. In this case, a length of the second area A2 in the longitudinal direction of the housing 10 may be shortened, and the plurality of areas included in the first area A1 may be connected to each other.

The first area A1 may be wider than the second area A2. Preferably, an area of the first area A1 may be three or more times that of the second area A2. Thus, the plurality of battery units 20 may be firmly mounted in the housing 10.

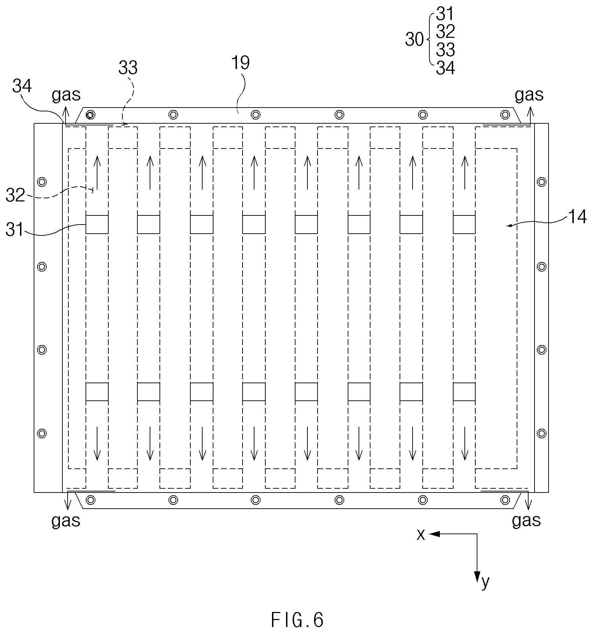

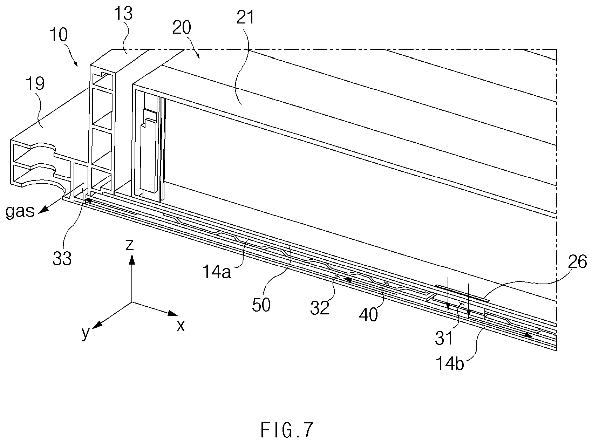

FIG. 6 is a plan view illustrating a vent passage of the battery pack according to an embodiment of the present invention, and FIG. 7 is a cutaway view illustrating the inlet, a first passage, and a second passage of FIG. 6.

A vent hole 26 through which a gas generated in the battery cell 22 is discharged may be defined in a bottom surface of the case 21 of each battery unit 20. When the battery cell 22 is burst or fired and thus is damaged, the gas generated in the battery cell 22 may leak into the case 21, and then, the gas may be discharged through a vent hole 26 defined in the case 21.

A plurality of vent holes 26 may be defined in the bottom surface of the case 21 of each battery unit 20. The plurality of vent holes 26 may be spaced apart from each other in the longitudinal direction of the case 21.

In more detail, the plurality of vent holes 26 may include a first vent hole 26a facing the first battery cell 23 in the battery unit 20 and a second vent hole 26b facing the second battery cells 24.

Thus, when the gas leaks from one battery cell 22 of the plurality of battery cells 22 arranged in a series form, the gas may be quickly discharged through the vent hole 26 that is closest to the one battery cell 22.

A vent passage 30 communicating with the first vent hole 26a and the second vent hole 26b is provided in the bottom part 14 of the housing 10. The gas discharged through the first vent hole 26a and/or the second vent hole 26b is discharged to the outside of the housing 10 through the vent passage 30.

In more detail, the vent passage 30 includes an inlet 31 provided in the inner bottom surface 14a of the housing 10 and facing the first vent hole 26a or the second vent hole 26b and a first passage 32 communicating with the inlet 31 and disposed between the inner bottom surface 14a and an outer bottom surface 14b of the housing 10. The vent passage 30 may further include a second passage 33 extending along the side part 13 of the housing 10 and communicating with the first passage 32. The vent passage 30 may further include an outlet 34 which is disposed at an end of the second passage 33 and through which the gas is discharged to the outside of a circumference of the housing 10.

The inlet 31 is provided in the bottom part 14 of the housing 10, more specifically, in the inner bottom surface 14a. The inlet 31 may be disposed in the second area A2 (see FIG. 3) of the inner bottom surface 14a of the housing 10.

The inlet 31 may be adjacent to the vent hole 26 of the battery unit 20 while facing each other. Thus, the gas discharged through the vent hole 26 may be immediately introduced into the inlet 31.

The inlet 31 may be provided to penetrate from the inner bottom surface 14a of the housing 10 to the first passage 32 to be described later.

The plurality of inlets 31 may be arranged in a predetermined matrix with respect to the longitudinal direction and the width direction of the housing 10. For example, as illustrated in FIG. 6, the plurality of inlets 31 may be provided in two rows with respect to the longitudinal direction of the housing 10 (e.g., a direction parallel to the x-axis of FIG. 6) and eight columns with respect to the width direction of the housing 10 (e.g., a direction parallel to the y-axis of FIG. 6).

The plurality of inlets 31 disposed on the same line in the width direction of the housing 10 may face the plurality of vent holes 26 defined in any one battery unit 20.

The first passage 32 may be disposed within the bottom part 14 of the housing 10. In more detail, the first passage 32 may be disposed between the inner bottom surface 14a and the outer bottom surface 14b of the housing 10.

The first passage 32 may be provided in plurality, which are parallel to each other. The plurality of first passages 32 may extend in parallel to the battery unit 20. The plurality of first passages 32 may be provided to correspond to the plurality of battery units 20. As a result, it may prevent the gas discharged from the vent hole 26 of one battery unit 20 from being introduced into the vent hole 26 of the other battery unit 20 while passing through the first passage 32 or prevent a temperature of the other battery unit 20 from rising due to heat of the gas or the like.

The second passage 33 may extend along the side part 13 of the housing 10. A plurality of first passages 32 may communicate with the second passage 33. In more detail, a pair of second passages 33 extending along both the side parts 13 of the housing 10 may be provided, and both ends of each first passage 32 may communicate with the pair of second passages 33.

In the case of one embodiment of the present invention, the second passage 33 may be provided in the expansion portion 19 extending outward from the side part 13 of the housing 10.

As a result, when compared to a case in which the second passage 33 is provided in the bottom part 14 of the housing 10, the temperature of the other battery units 20 may be prevented from increasing due to the heat of the gas passing through the second passage 33.

That is, due to the configuration of the first passage 32 and the second passage 33, when fire or the like occurs in any one battery unit 20, and thus, a gas is discharged, thermal propagation between the plurality of battery units 20 may be minimized.

The outlet 34 may be disposed at an end of the second passage 33. The outlet 34 may be an opening facing the outside of the housing 10. The outlet 34 may face the outside of the circumference of the housing 10. A pair of outlets 34 may be provided for each second passage 33. The pair of outlets 34 may be disposed at both ends of the second passage 33.

The second passage 33 may be disposed along both the side parts of the housing 10, and the pair of outlets 34 may be provided in each second passage 33. As a result, a path, through which the gas discharged from any one battery unit 20 is discharged to the outside of the housing 10, may be shortened.

Furthermore, a coolant passage 40 partitioned from the vent passage 30 may be provided in the bottom part 14 of the housing 10. In more detail, the coolant passage 40 may be disposed between the inner bottom surface 14a and the outer bottom surface 14b of the housing 10 and may be partitioned from the first passage 32.

The coolant passage 40 may be disposed above the first passage 32. In more detail, the coolant passage 40 may be provided to pass between the first passage 32 and the inner bottom surface 14a of the housing 10. That is, a distance between the coolant passage 40 and each of the plurality of battery units 20 may be less than that between the first passage 32 and each of the plurality of battery units 20. In addition, the coolant passage 40 may be provided to cross the first passage 32.

Thus, an effect of the heat of the gas passing through the first passage 32 on the plurality of battery units 20 may be reduced. In addition, the battery unit 20 may be quickly heated by a coolant (e.g., water) passing through the coolant passage 40.

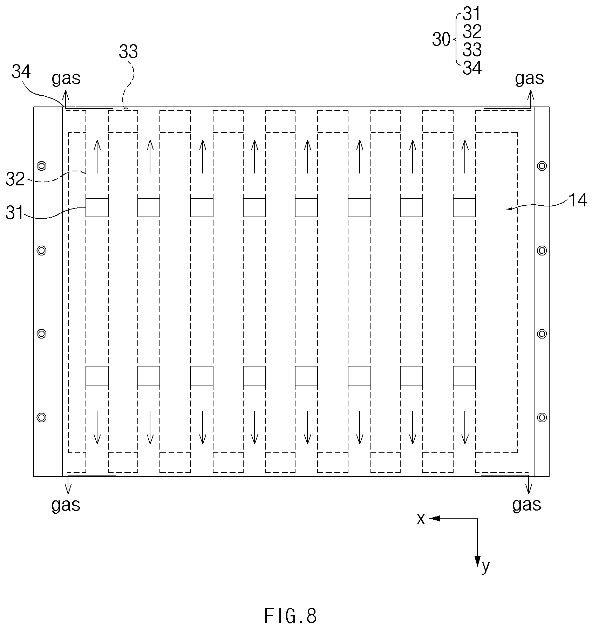

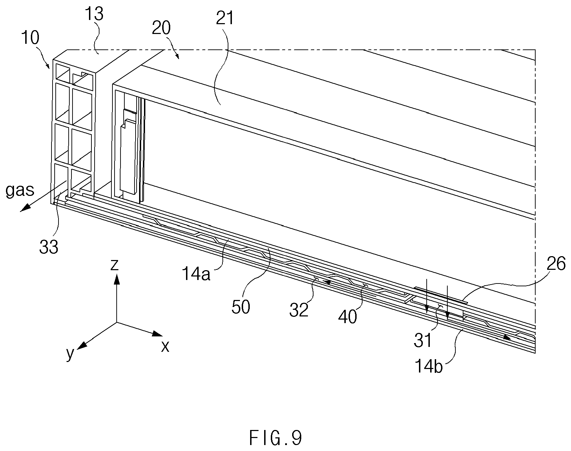

FIG. 8 is a plan view illustrating a vent passage of a battery pack according to another embodiment of the present invention, and FIG. 9 is a cutaway view illustrating an inlet, a first passage, and a second passage of FIG. 8.

In the present embodiment, a second passage 33 may be provided in a side part 13 of the housing 10. As a result, a degree of freedom in designing a housing 10 may increase. For example, a separate expansion portion may be detachably coupled to the housing 10.

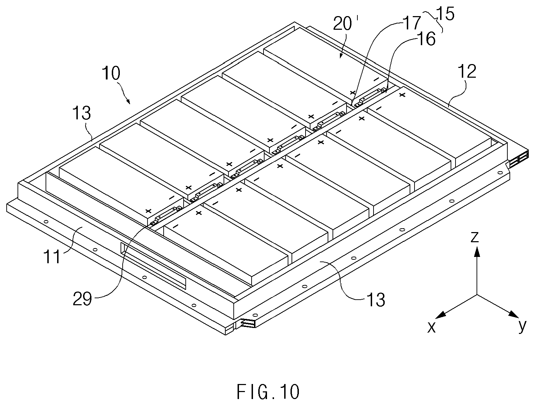

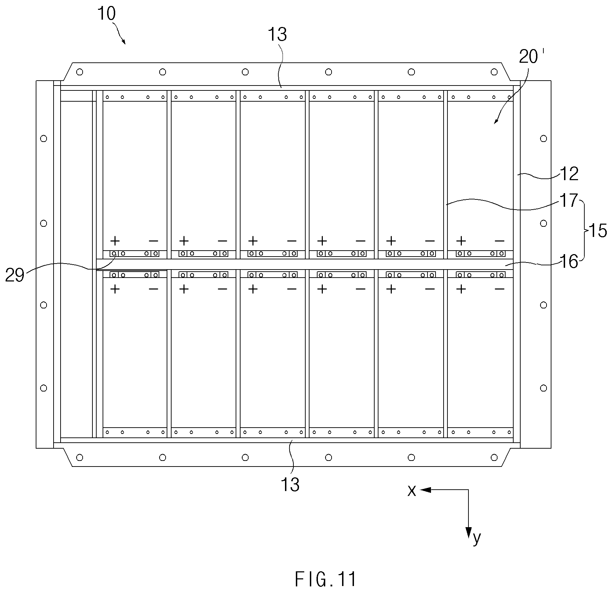

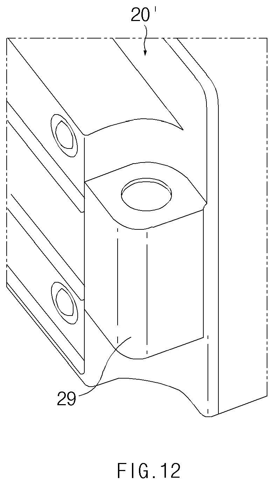

FIG. 10 is a perspective view of a battery pack according to a comparative example, FIG. 11 is a plan view of the battery pack according to the comparative example, and FIG. 12 is an enlarged view illustrating a coupling part and a periphery of the coupling part, which are illustrated in FIG. 10.

A length of each of a plurality of battery units 20' included in a battery pack according to a comparative example may be less than half of a distance between both side parts 13 of a housing 10. Thus, a pair of battery units 20' may be disposed in a width direction of the housing 10.

This may be because a plurality of battery cells included in each battery unit 20' are stacked in a parallel form rather than in a series form. That is, the plurality of battery cells included in the battery unit 20' may be stacked in a longitudinal direction of the housing 10 (e.g., a direction parallel to an x-axis of FIG. 10).

In addition, in order to reinforce rigidity of the battery pack, the housing 10 may be provided with a reinforcing part 15 disposed to pass between some and others of the plurality of battery units 20'.

The reinforcing part 15 may have a cross beam shape. In more detail, the reinforcing part 15 may include a first reinforcing part 16 and a plurality of second reinforcing parts 17 extending in a direction crossing the first reinforcing part 16.

The first reinforcing part 16 may extend in the longitudinal direction of the housing 10 and cross between the battery unit 20' disposed at one side of the housing 10 in the width direction and the battery unit 20' disposed at the other side of the housing 10 in the width direction. Each of the second reinforcing parts 17 may be connected to the first reinforcing part 16, extend in the width direction of the housing 10, and cross between the adjacent battery units 20'.

In addition, in order to mount each battery unit 20' in the housing 10, each battery unit 20' may be provided with a coupling part 29 that mechanically couples a case of the battery unit 20' to the inside of the housing 10. For example, the coupling part 29 may be a coupling boss provided at a corner of the case of the battery unit 20'.

In addition, a coupling hole (not shown) corresponding to the coupling part 29 may be provided inside the housing 10.

However, in a battery pack according to the comparative example, since the reinforcing part 15 and the coupling part 29 occupy a portion of a space in the housing 10, space utilization and energy density of the battery pack may be deteriorated.

On the other hand, in the housing 10 of the battery pack 1 according to the embodiment of the present invention, a reinforcing part disposed to pass between some and the others of the plurality of battery units 20 (see FIGS. 1 and 2) may not be provided. Accordingly, the energy density of the battery pack 1 may increase. In this regard, as described above, the high rigidity of the battery pack 1 may be maintained even without a separate reinforcing part, unlike the comparative example, due to the self-rigidity and structural rigidity of the case 21 of the plurality of battery units 20.

In addition, the housing 10 according to an embodiment of the present invention may not be provided with the coupling part for mechanically coupling the case 21 of the battery unit 20 (see FIGS. 1 and 2) to the inside of the housing 10. Accordingly, the energy density of the battery pack 1 may increase. In this regard, as described above, the plurality of battery units 20 may be stably mounted in the housing 10 by the attachment member 50 provided on the bottom part 14 of the housing 10.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims.

**[Description of the Symbols]**

| | | | |
|---|---|---|---|
| 1: | Battery pack | 10: | Housing |
| 11: | Front part | 12: | Rear part |
| 13: | Side part | 14: | Bottom part |
| 14a: | Inner bottom surface | 14b: | Outer bottom surface |
| 19: | Expansion portion | 20: | Battery unit |
| 21: | Case | 22: | Battery cell |
| 23: | First cell | 24: | Second cell |
| 26: | Vent hole | 30: | vent passage |
| 31: | Inlet | 32: | First passage |
| 33: | Second passage | 34: | Outlet |
| 40: | Coolant passage | 50: | Attachment member |

## Claims

1. A battery pack comprising:
a housing (10): and
a plurality of battery units (20) disposed in the housing (10),
wherein each of the battery units (20) comprises:
a first battery cell (23) extending in a width direction (x) of the housing (10);
a second battery cell (24) disposed at one side of the first battery cell (23) in the width direction (x) of the housing (10) and aligned in parallel to the first battery cell (23); and
a rigid case (21) extending in parallel to the width direction (x) of the housing (10) to integrally accommodate the first battery cell (23) and the second battery cell (24),
wherein the case (21) comprises:
a first vent hole (26a) facing the first battery cell (23); and
a second vent hole (26b) facing the second battery cell (24),
wherein a vent passage (30) communicating with the first vent hole (26a) and the second vent hole (26b) is provided in the housing (10),
**characterized in that**:
the first vent hole (26a) and the second vent hole (26b) are defined in a bottom surface (14a, 14b) of the case (21), and
the vent passage (30) is provided in a bottom part (14) of the housing (10),
the vent passage (30) comprises:
an inlet (31) provided in an inner bottom surface (14a) of the housing (10) and facing the first vent hole (26a) or the second vent hole (26b); and
a first passage (32) configured to communicate with the inlet (31) and disposed between the inner bottom surface (14a) and an outer bottom surface (14b) of the housing (10).

2. The battery pack according to claim 1, wherein the cases (21) of the plurality of battery units (20) are stacked to be in contact with or adjacent to each other.

3. The battery pack according to claim 1, wherein a length (L) of the case (21) is greater than half of a distance between both side parts (13) of the housing (10).

4. The battery pack according to claim 1, wherein there is no reinforcing part (15, 16, 17) disposed to pass between the battery units (20) provided in the housing (10).

5. The battery pack according to claim 1, wherein there is no coupling part (29) configured to mechanically couple the case (21) to the inside of the housing (10) provided in the housing (10).

6. The battery pack according to claim 1, wherein the first passage (32) extends in parallel to the battery unit (20).

7. The battery pack according to claim 1, wherein the vent passage (30) further comprises a second passage (33) extending along a side part (13) of the housing (10) and configured to communicate with the first passage (32).

8. The battery pack according to claim 7, wherein the bottom part (14) of the housing (10) comprises an expansion portion (19) further expanding outward than the side part (13) of the housing (10), and
the second passage (33) is provided in the expansion portion (19).

9. The battery pack according to claim 7, wherein the second passage (33) is provided in the side part (13) of the housing (10).

10. The battery pack according to claim 7, wherein the vent passage (30) further comprises an outlet (34) disposed at an end of the second passage (33) to discharge a gas to the outside of a circumference of the housing (10).

11. The battery pack according to claim 1, wherein the inner bottom surface (14a) of the housing (10) comprises:
a first area (A1) provided with an attachment member (50) to which the plurality of battery units (20) are attached; and
a second area (A2) in which the inlet (31) is provided.

12. The battery pack according to claim 1, wherein a coolant passage (40) disposed between the inner bottom surface (14a) and the outer bottom surface (14b) of the housing (10) and partitioned from the first passage (32) is provided in the housing (10).

13. The battery pack according to claim 12, wherein the coolant passage (40) is disposed above the first passage (32).

## Patentansprüche

1. Batteriepack, umfassend:
ein Gehäuse (10); und
eine Mehrzahl von Batterieeinheiten (20), welche in dem Gehäuse (10) angeordnet sind,
wobei jede der Batterieeinheiten (20) umfasst:
eine erste Batteriezelle (23), welche sich in einer Breitenrichtung (x) des Gehäuses (10) erstreckt;
eine zweite Batteriezelle (24), welche an einer Seite der ersten Batteriezelle (23) in der Breitenrichtung (x) des Gehäuses (10) angeordnet ist und parallel zu der ersten Batteriezelle (23) ausgerichtet ist; und
ein rigides Fach (21), welches sich parallel zu der Breitenrichtung (x) des Gehäuses (10) erstreckt, um die erste Batteriezelle (23) und die zweite Batteriezelle (24) integral aufzunehmen,
wobei das Fach (21) umfasst:
ein erstes Entlüftungsloch (26a), welches der ersten Batteriezelle (23) zugewandt ist; und
ein zweites Entlüftungsloch (26b), welches der zweiten Batteriezelle (24) zugewandt ist,
wobei ein Entlüftungsdurchgang (30), welcher mit dem ersten Entlüftungsloch (26a) und dem zweiten Entlüftungsloch (26b) kommuniziert, in dem Gehäuse (10) bereitgestellt ist,
**dadurch gekennzeichnet, dass**
das erste Entlüftungsloch (26a) und das zweite Entlüftungsloch (26b) in einer Bodenfläche (14a, 14b) des Fachs (21) definiert sind, und
der Entlüftungsdurchgang (30) in einem Bodenteil (14) des Gehäuses (10) bereitgestellt ist,
wobei der Entlüftungsdurchgang (30) umfasst:
einen Einlass (31), welcher in einer inneren Bodenfläche (14a) des Gehäuses (10) bereitgestellt ist und dem ersten Entlüftungsloch (26a) oder dem zweiten Entlüftungsloch (26b) zugewandt ist; und
einen ersten Durchgang (32), welcher dazu eingerichtet ist, mit dem Einlass (31) zu kommunizieren und welcher zwischen der inneren Bodenfläche (14a) und einer äußeren Bodenfläche (14b) des Gehäuses (10) angeordnet ist.

2. Batteriepack nach Anspruch 1, wobei die Fächer (21) der Mehrzahl von Batterieeinheiten (20) gestapelt sind, um in Kontakt miteinander oder benachbart zueinander zu sein.

3. Batteriepack nach Anspruch 1, wobei eine Länge (L) des Fachs (21) größer als eine Hälfte eines Abstands zwischen beiden Seitenteilen (13) des Gehäuses (10) ist.

4. Batteriepack nach Anspruch 1, wobei kein verstärkender Teil (15, 16, 17) angeordnet ist, um zwischen die Batterieeinheiten (20) zu treten, welche in dem Gehäuse (10) bereitgestellt sind.

5. Batteriepack nach Anspruch 1, wobei kein Kopplungsteil (29) vorliegt, welcher dazu eingerichtet ist, das Fach (21) mit dem Inneren des Gehäuses (10) mechanisch zu koppeln, welches in dem Gehäuse (10) bereitgestellt ist.

6. Batteriepack nach Anspruch 1, wobei sich der erste Durchgang (32) parallel zu der Batterieeinheit (20) erstreckt.

7. Batteriepack nach Anspruch 1, wobei der Entlüftungsdurchgang (30) ferner einen zweiten Durchgang (33) umfasst, welcher sich entlang eines Seitenteils (13) des Gehäuses (10) erstreckt und dazu eingerichtet ist, mit dem ersten Durchgang (32) zu kommunizieren.

8. Batteriepack nach Anspruch 7, wobei der Bodenteil (14) des Gehäuses (10) einen Ausdehnungsabschnitt (19) umfasst, welcher sich weiter nach außen als der Seitenteil (13) des Gehäuses (10) ausdehnt, und
wobei der zweite Durchgang (33) in dem Ausdehnungsabschnitt (19) bereitgestellt ist.

9. Batteriepack nach Anspruch 7, wobei der zweite Durchgang (33) in dem Seitenteil (13) des Gehäuses (10) bereitgestellt ist.

10. Batteriepack nach Anspruch 7, wobei der Entlüftungsdurchgang (30) ferner einen Auslass (34) umfasst, welcher an einem Ende des zweiten Durchgangs (33) angeordnet ist, um ein Gas an das Äußere eines Umfangs des Gehäuses (10) abzuführen.

11. Batteriepack nach Anspruch 1, wobei die innere Bodenfläche (14a) des Gehäuses (10) umfasst
einen ersten Bereich (A1), welcher mit einem Befestigungselement (50) bereitgestellt ist, an welches die Mehrzahl von Batterieeinheiten (20) befestigt sind; und
einen zweiten Bereich (A2), in welchem der Einlass (31) bereitgestellt ist.

12. Batteriepack nach Anspruch 1, wobei ein Kühlmitteldurchgang (40) in dem Gehäuse (10) bereitgestellt ist, welcher zwischen der inneren Bodenfläche (14a) und der äußeren Bodenfläche (14b) des Gehäuses (10) angeordnet ist und von dem ersten Durchgang (32) getrennt ist.

13. Batteriepack nach Anspruch 12, wobei der Kühlmitteldurchgang (40) über dem ersten Durchgang (32) angeordnet ist.

## Revendications

1. Bloc-batterie comprenant :
un logement (10) ; et
une pluralité d'unités de batterie (20) disposées dans le logement (10),
dans lequel chacune des unités de batterie (20) comprend :
un premier élément de batterie (23) s'étendant dans une direction de largeur (x) du logement (10) ;
un second élément de batterie (24) disposé au niveau d'un côté du premier élément de batterie (23) dans la direction de largeur (x) du logement (10) et aligné parallèlement au premier élément de batterie (23) ; et
un boîtier (21) rigide s'étendant parallèlement à la direction de largeur (x) du logement (10) pour recevoir d'une seule pièce le premier élément de batterie (23) et le second élément de batterie (24),
dans lequel le boîtier (21) comprend :
un premier trou d'aération (26a) faisant face au premier élément de batterie (23) ; et
un second trou d'aération (26b) faisant face au second élément de batterie (24),
dans lequel un passage d'aération (30) communiquant avec le premier trou d'aération (26a) et le second trou d'aération (26b) est fourni dans le logement (10),
**caractérisé en ce que** :
le premier trou d'aération (26a) et le second trou d'aération (26b) sont définis dans une surface inférieure (14a, 14b) du boîtier (21), et
le passage d'aération (30) est fourni dans une partie inférieure (14) du logement (10), le passage d'aération (30) comprend :
une entrée (31) fournie dans une surface inférieure (14a) interne du logement (10) et faisant face au premier trou d'aération (26a) ou au second trou d'aération (26b) ; et
un premier passage (32) configuré pour communiquer avec l'entrée (31) et disposé entre la surface inférieure (14a) interne et une surface inférieure (14b) externe du logement (10).

2. Bloc-batterie selon la revendication 1, dans lequel les boîtiers (21) de la pluralité d'unités de batterie (20) sont empilés pour être en contact les uns avec les autres ou adjacents les uns aux autres.

3. Bloc-batterie selon la revendication 1, dans lequel une longueur (L) du boîtier (21) est plus grande que la moitié d'une distance entre les deux parties latérales (13) du logement (10).

4. Bloc-batterie selon la revendication 1, dans lequel il n'y a aucune partie de renfort (15, 16, 17) disposée pour passer entre les unités de batterie (20) fournie dans le logement (10).

5. Bloc-batterie selon la revendication 1, dans lequel il n'y a aucune partie d'accouplement (29) configurée pour accoupler mécaniquement le boîtier (21) à l'intérieur du logement (10) fournie dans le logement (10).

6. Bloc-batterie selon la revendication 1, dans lequel le premier passage (32) s'étend parallèlement à l'unité de batterie (20).

7. Bloc-batterie selon la revendication 1, dans lequel le passage d'aération (30) comprend en outre un second passage (33) s'étendant le long d'une partie latérale (13) du logement (10) et configuré pour communiquer avec le premier passage (32).

8. Bloc-batterie selon la revendication 7, dans lequel la partie inférieure (14) du logement (10) comprend une portion de déploiement (19) se déployant davantage vers l'extérieur que la partie latérale (13) du logement (10), et
le second passage (33) est fourni dans la portion de déploiement (19).

9. Bloc-batterie selon la revendication 7, dans lequel le second passage (33) est fourni dans la partie latérale (13) du logement (10).

10. Bloc-batterie selon la revendication 7, dans lequel le passage d'aération (30) comprend en outre une sortie (34) disposée à une extrémité du second passage (33) pour évacuer un gaz vers l'extérieur d'une circonférence du logement (10).

11. Bloc-batterie selon la revendication 1, dans lequel la surface inférieure (14a) interne du logement (10) comprend :
une première zone (A1) pourvue d'un élément de fixation (50) auquel la pluralité d'unités de batterie (20) sont fixées ; et
une seconde zone (A2) dans laquelle l'entrée (31) est fournie.

12. Bloc-batterie selon la revendication 1, dans lequel un passage de fluide de refroidissement (40) disposé entre la surface inférieure (14a) interne et la surface inférieure (14b) externe du logement (10) et séparé du premier passage (32) est fourni dans le logement (10).

13. Bloc-batterie selon la revendication 12, dans lequel le passage de fluide de refroidissement (40) est disposé au-dessus du premier passage (32).
